(19) Europäisches Patentamt
European Patent Office
Office européen des brevets

(11) **EP 3 606 654 B1**

(12) **FASCICULE DE BREVET EUROPEEN**

(45) Date de publication et mention de la délivrance du brevet:
**24.01.2024 Bulletin 2024/04**

(21) Numéro de dépôt: **18728207.4**

(22) Date de dépôt: **02.05.2018**

(51) Classification Internationale des Brevets (IPC):
**B01F 23/451** *(2022.01)*    **B01F 33/30** *(2022.01)*
**B01F 35/81** *(2022.01)*    **G01N 35/08** *(2006.01)*
**G01N 35/10** *(2006.01)*    **B01L 3/00** *(2006.01)*

(52) Classification Coopérative des Brevets (CPC):
**G01N 35/085; B01F 23/451; B01F 33/30;**
**B01F 35/81;** B01L 3/502738; G01N 35/1097

(86) Numéro de dépôt international:
**PCT/FR2018/051089**

(87) Numéro de publication internationale:
**WO 2018/202994 (08.11.2018 Gazette 2018/45)**

(54) **SYSTEME DE MELANGE MICROFLUIDIQUE COMPRENANT UN INJECTEUR COMMANDE POUR EFFECTUER UN MELANGE AVEC UNE DISPERSION DE TYPE TAYLOR ARIS, ET PROCÉDÉ**

MIKROFLUIDISCHES MISCHSYSTEM UMFASSEND EINEN KONTROLLIERTEN INJEKTOR ZUM MISCHEN MIT EINER TAYLOR-ARIS-DISPERSION, UND VERFAHREN

MICROFLUIDIC MIXING SYSTEM COMPRISING A CONTROLLED INJECTOR FOR MIXING WITH A TAYLOR-ARIS-TYPE DISPERSION, AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2017 FR 1753881**

(43) Date de publication de la demande:
**12.02.2020 Bulletin 2020/07**

(73) Titulaire: **Commissariat à l'Energie Atomique et aux Energies Alternatives**
**75015 Paris (FR)**

(72) Inventeurs:
• **NERI QUIROZ, José Antonio**
**Zapopan, Jalisco 45237 (MX)**
• **MAGNALDO, Alastair**
**30330 Connaux (FR)**
• **CANTO, Fabrice**
**34160 Boisseron (FR)**
• **GUILLERME, Laurent**
**26790 Tulette Cedex 24 (FR)**

(74) Mandataire: **Brevalex**
**Tour Trinity**
**1 B Place de la Défense**
**92400 Courbevoie (FR)**

(56) Documents cités:
WO-A1-2012/087840    WO-A1-2014/135512
WO-A1-2015/124873    WO-A2-2011/042509

EP 3 606 654 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

L'invention concerne un procédé et un système de mélange microfluidique. Plus spécifiquement, l'invention s'applique à l'analyse automatisée de liquides en écoulement ou de liquides statiques dans un système de mélange microfluidique.

**ÉTAT DE LA TECHNIQUE ANTÉRIEURE**

L'analyse FIA, de l'anglais « Flow Injection Analysis », ou analyse par injection d'analyte dans le flux liquide d'un porteur qui est appelé fluide vecteur dans la suite du document, concerne une famille de techniques analytiques dont l'une est décrite dans le document référencé [1] en fin de description. Un premier principe commun à toutes les méthodes analytiques mises en oeuvre en analyse FIA est la dispersion contrôlée d'un liquide dans un flux de liquide vecteur. La dispersion combine des effets de diffusion et des effets de dilution lors de l'écoulement dans un tuyau de petit diamètre.

Cette dispersion a lieu notamment lorsqu'une zone restreinte d'un liquide présent dans un tuyau à une concentration donnée est introduite dans un flux de liquide vecteur, grâce à la différence des vitesses d'écoulement entre les bords et le centre du tuyau. En même temps, la diffusion dilue les parties extrêmes de la zone créant ainsi un gradient de concentration, surtout aux extrémités.

La compréhension des phénomènes de dispersion et des réactions chimiques qui s'y rajoutent est encore incomplète. Cependant, la plupart du temps, une compréhension injection des phénomènes n'est pas nécessaire en vertu d'un avantage commun à toutes les méthodes analytique mises en oeuvre en analyse FIA : une très bonne reproductibilité. En effet, avant la mise en oeuvre de l'analyse FIA, il était souvent nécessaire d'obtenir, dans le procédé analytique, des réactions chimiques complètes afin d'atteindre des reproductibilités comparables. L'analyse FIA ne laisse souvent pas un délai suffisant à des réactions complètes, mais assure un temps de réaction identique et reproductible pour chaque analyse. Ainsi, chaque portion de l'échantillon subit des traitements différents, mais de façon reproductible entre les échantillons. Il s'agit d'une avancée significative dans l'analyse automatisée, notamment du fait de la réduction des temps d'analyse et l'allègement des interventions de l'utilisateur.

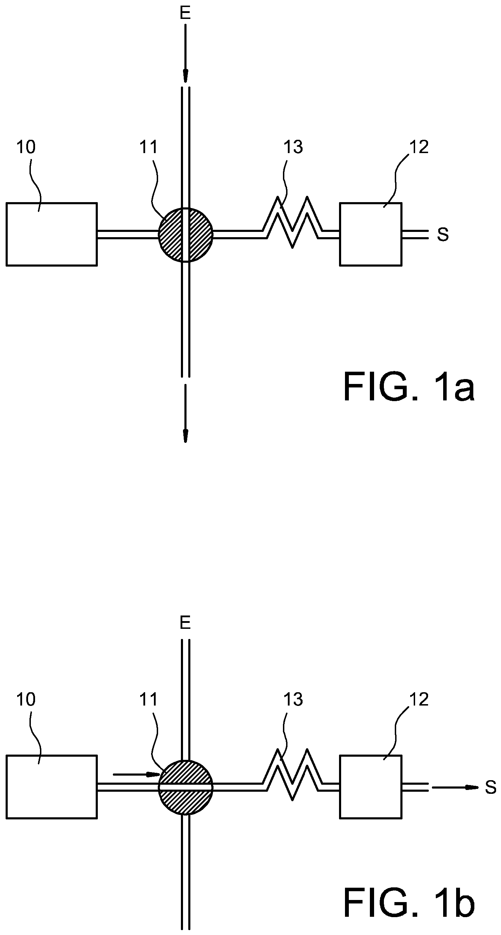

Les premières applications de l'analyse FIA utilisent un flux continu dans une seule direction : une zone de l'échantillon est injectée dans le flux continu d'un fluide vecteur. Au cours du temps, le flux continu crée le mélange permettant à la réaction du procédé analytique d'avoir lieu pour engendrer des espèces détectables. Comme illustré sur les figures 1a et 1b, cette technique nécessite une pompe 10, une valve d'injection à deux voies 11, un détecteur en ligne 12 et une boucle de réaction 13. Cette boucle 13 est constituée du tuyau séparant la valve d'injection 11 du détecteur 12. L'introduction de l'échantillon à analyser se fait par l'entrée E. S représente la sortie des effluents. Le choix des caractéristiques de la boucle, c'est-à-dire ses dimensions et sa forme, dépend du procédé analytique considéré. Le volume mort du détecteur est suffisamment faible pour la résolution demandée. Les caractéristiques de l'écoulement doivent être constantes et reproductibles. La fréquence analytique est imposée par les caractéristiques de la dispersion : elle est ainsi limitée afin d'éviter toute pollution entre échantillons successifs.

Les figures 1a et 1b représentent une séquence analytique typique. Dans un premier temps illustré sur la figure 1a, l'échantillon est passé dans une boucle d'injection jusqu'à ce que le contenu de la valve d'injection 11 soit représentatif de celui-ci. Comme illustré sur la figure 1b, la valve d'injection 11 est ensuite commutée pour permettre l'injection du contenu de la valve dans le flux de réactif. L'échantillon est ensuite dispersé dans le tuyau 13 par le flux continu pour être détecté dans le détecteur 12 lors de son passage.

Les avantages de la technique d'analyse FIA par rapport aux techniques antérieures sont une plus forte fréquence analytique, une plus faible consommation d'échantillon et une très bonne reproductibilité. Ses désavantages sont une plus grande consommation de réactifs, une plus grande consommation de fluides vecteurs et une forte complexité des séquences pour des procédés nécessitant plusieurs étapes de traitement. Les réactifs supplémentaires nécessaires à la réaction chimique du procédé sont introduits par des jonctions dans le flux de fluide vecteur. Chaque réactif doit ainsi être introduit par une dérivation, et possède donc un élément de pompage qui lui est propre.

L'analyse FIA telle que décrite ci-dessus est largement utilisée en analyse automatisée et contribue à la grande majorité des publications dans le domaine. Une des avancées issue de la technique de l'analyse FIA est l'analyse par injection séquentielle.

L'analyse par injection séquentielle ou analyse SIA, de l'anglais « sequential injection analysis », et l'analyse FIA ont en commun le principe de dispersion et le maniement des fluides de façon reproductible. L'analyse SIA apporte, en plus, une utilisation d'un flux bidirectionnel et des périodes d'arrêt du fluide. En outre, la valve à deux positions de l'analyse FIA est remplacée par une valve multidirectionnelle. L'analyse SIA peut ainsi analyser des solutions en utilisant des procédés chimiques plus compliqués, tout en conservant des composants technologiques relativement fiables.

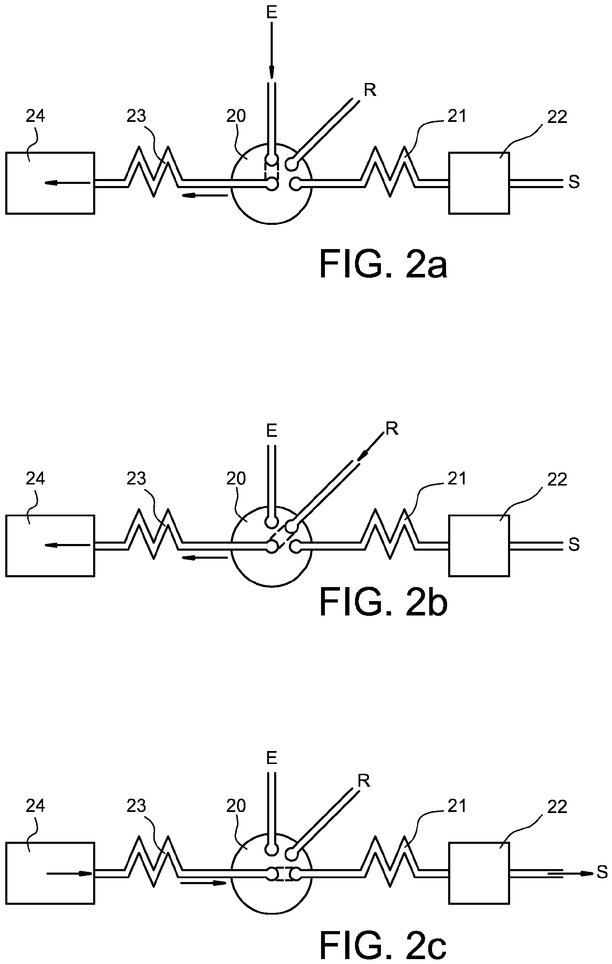

Les figures 2a à 2c, qui illustrent un système classique d'analyse SIA, représentent une valve multidirectionnelle 20, une boucle de mélange 21, et un détecteur 22, une boucle de rétention 23 et une pompe bidirectionnelle 24.

En général l'analyse est effectuée en trois séquences. La première séquence est le remplissage du système par une solution vecteur, par exemple de l'eau désionisée. L'objet de cette séquence est de pourvoir le système d'un vecteur inerte capable de transporter, y compris lors des inversions de flux, les zones de l'échantillon à analyser. La seconde séquence, comme illustrée sur les figures 2a et 2b, est l'aspiration alternée de zones d'échantillon, et du (des) réactif(s) nécessaire(s) R pour le procédé analytique sous la forme d'un train de zones, le tout étant disposé dans la boucle de rétention 23. La troisième séquence, comme illustrée sur la figure 2c, est la dispersion de ce train de zones dans la boucle de mélange 21 suivi du passage devant le détecteur 22. La formation d'un train de zones d'échantillon et de réactifs ne nécessite l'emploi que d'une seule pompe 24, contrairement au cas général de l'analyse FIA. Cependant, elle doit intégrer des contraintes supplémentaires liées au flux bidirectionnel.

Les avantages de l'analyse SIA par rapport à l'analyse FIA sont les suivants : un nombre plus restreint de composantes technologiques permettant l'application de procédés plus compliqués, une plus grande flexibilité apportée par la possibilité d'inversion du flux et une plus grande facilité d'optimisation sans nécessiter de recâblage. Cependant les volumes nécessaires, notamment en fluide vecteur, sont importants : typiquement 10 à 100 fois plus importants que les volumes de réactifs.

Plus récemment, une possibilité d'analyse séquentielle sans solution vecteur a été proposée, l'analyse par CSIA, de l'anglais « carrier-less sequential injection analysis » ou « analyse par injection séquentielle sans porteur ». L'analyse CSIA, décrite par exemple dans le document référencé [2], inclut les avantages de l'analyse SIA, dont le faible nombre de composantes technologiques, et évite les désavantages potentiels de l'utilisation d'un fluide vecteur qui sont, entre autres, un volume d'effluent analytique élevé lié au facteur de multiplication entre les volumes de réactifs et de solution vecteur.

Un système classique d'analyse CSIA se présente de façon analogue au système illustré sur les figures 2a à 2c. Cependant la séquence analytique est différente. Elle est, en général, effectuée selon les étapes suivantes : la boucle de rétention 23 est remplie d'analyte par aspiration par la pompe 24. Une portion de l'analyte est refoulée en direction de la boucle de mélange 21 et du détecteur 22. L'aspiration de l'analyte est complétée. Ensuite, les réactifs sont aspirés par basculement de la vanne multivoies 20. Un nouveau basculement de cette vanne 20 permet à la pompe 24 de refouler le réactif et l'analyte successivement dans la boucle de mélange 21 et le détecteur 22.

Par rapport à l'analyse SIA, l'élimination du liquide vecteur a pour conséquence l'utilisation d'un volume plus important d'analyte et une rétention dans une boucle suffisamment volumineuse.

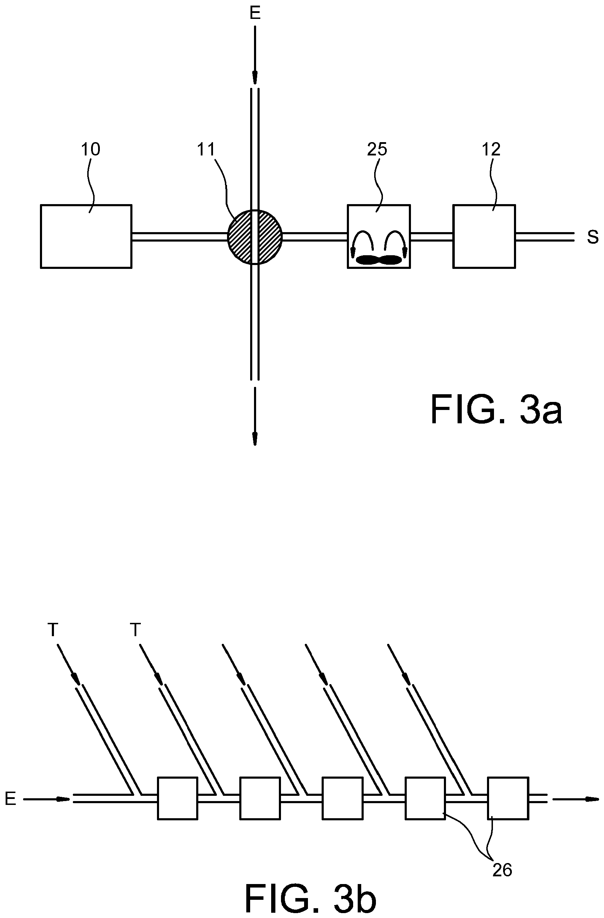

La mise en oeuvre de méthodes analytiques de titrage, également connues sous le nom d'analyses volumétriques, par ces techniques de dispersion contrôlée nécessite l'emploi de composants techniques additionnels. Comme illustré sur la figure 3a, une solution technique consiste à utiliser une chambre de mélange 25, située entre la zone d'injection 11 et le détecteur 12, la pompe étant référencée 10. Lorsqu'un constituant est ajouté à un autre déjà présent dans la chambre de mélange 25, un gradient de concentration permettant le titrage est obtenu à la sortie de cette chambre 25, avant le passage devant le détecteur 12. Une autre solution consiste à utiliser deux pompes à débits variables de façon suffisamment précise : une pompe délivrant l'analyte, l'autre le titrant. Une boucle de réaction réalise un mélange partiel ou complet des solutions avant le passage devant une cellule de mesure en ligne. Le titrage s'effectue ensuite par l'établissement d'un gradient: le débit - ou la concentration - du titrant - ou de l'analyte -varie de façon continue dans le temps, d'autres propriétés du mélange étant maintenues constantes. Une telle solution, nécessitant des mesures individuelles successives, est consommatrice de temps. Le grand nombre de mesures individuelles n'en fait pas réellement une méthode continue.

Certaines solutions décrivent des techniques de titrage en continu par injection du titrant à des endroits géométriques définis le long d'un capillaire, dans lequel circule en permanence l'analyte. Comme décrit dans le document référencé [3] et comme illustré sur la figure 3b, l'analyte circulant dans un capilaire entrant en E, reçoit à chaque lieu d'injection un débit de titrant T. Après chaque ajout consécutif et après sa réaction chimique complète, l'état du mélange est mesuré par un détecteur 26. Les ajouts consécutifs sont poursuivis jusqu'à l'épuisement de l'analyte. Une pré-dilution est nécessaire afin d'améliorer la précision.

Les volumes de l'analyte et des effluents liquides peuvent être d'une grande importance, notamment dans le cas de prélèvements pouvant présenter des risques pour l'homme comme les solutions radioactives ou biologiques. Plus généralement, ceci peut être le cas de solutions liquides à analyser issues d'un pré-traitement, par exemple d'une concentration, d'une séparation ou de toutes opérations chimiques ne pouvant être réalisées à plus grande échelle. Ceci peut être également le cas de solutions de toutes sortes issues de dispositifs submillimétriques dont des puces microfluidiques.

Certains systèmes d'analyse microfluidique de structure connue comprennent une source lumineuse et un détecteur de luminosité pour déterminer la concentration d'un échantillon dans le liquide vecteur, ce qui tend à rendre le système moins encombrant et plus facile d'utilisation.

Les systèmes analytiques par analyse FIA consomment beaucoup de liquide vecteur et de réactif. Les systèmes analytiques par analyse SIA et CSIA consomment beaucoup de liquides en général mais présentent aussi des volumes et longueurs des boucles de rétention et réaction importants, difficilement compatibles avec les contraintes exigées par la plupart des méthodes de fabrication des circuits miniaturisés.

De plus les systèmes analytiques par analyse FIA, SIA ou CSIA nécessitent l'utilisation de vannes, ce qui est pénalisant lorsque l'on cherche à miniaturiser l'analyse. Les analyses SIA et CSIA nécessitent l'emploi d'une pompe bidirectionnelle, qui peut poser certains soucis, notamment de dégazage entraînant la formation de bulles de gaz, perturbant grandement la reproductibilité des analyses surtout lorsque l'on cherche à réaliser une miniaturisation. Les analyses FIA, SIA et CSIA nécessitent l'injection d'un échantillon de façon reproductible, notamment en ce qui concerne son volume.

Enfin, lorsque le procédé analytique nécessite des titrages, l'adjonction d'une chambre de mélange est difficilement compatible avec un objectif de miniaturisation.

Le document référencé [4] décrit un procédé et un système de mélange microfluidique comprenant l'injection d'un deuxième liquide dans un conduit microfluidique comprenant un premier liquide.

## EXPOSÉ DE L'INVENTION

L'invention vise à résoudre au moins partiellement les problèmes rencontrés dans les solutions de l'art antérieur.

A cet égard, l'invention a pour objet un procédé de mélange microfluidique selon la revendication 1.

Le procédé comprend l'injection en régime balistique d'au moins un deuxième liquide dans un conduit microfluidique qui comporte un premier liquide. Le premier liquide comprend une première composition. Le deuxième liquide est injecté de manière à se disperser dans le premier liquide selon une dispersion de type Taylor-Aris du deuxième liquide relativement au premier liquide dans le conduit microfluidique. Le deuxième liquide comprend une portion amont et une portion aval. La portion amont comprend une deuxième composition différente de la première composition. La portion aval comprend la première composition et elle est située en aval de la portion amont. Le deuxième liquide est injecté dans le conduit microfluidique, de manière à ce que la portion aval pousse la portion amont dans le conduit microfluidique, pour obtenir une concentration quasi homogène de la deuxième composition dans une portion centrale du conduit microfluidique.

Le conduit microfluidique est notamment droit.

Grâce à l'invention, il est notamment possible d'effectuer un mélange de concentration quasi-homogène de la deuxième composition dans le liquide comprenant la première composition, notamment une dilution de la deuxième composition dans le liquide comprenant la première composition.

Par ailleurs, l'injection de liquide peut se faire en continu, ce qui permet de réaliser un titrage. Du fait de l'injecteur commandé, les volumes d'échantillons, de liquide vecteur et/ou de réactifs nécessaires pour l'analyse sont limités. Le système de mélange microfluidique tend également à être peu encombrant.

Le terme microfluidique se rapporte à un ordre de grandeur en micromètre, c'est-à-dire qu'au moins une des dimensions des capillaires est inférieure au millimètre.

L'invention peut comporter de manière facultative une ou plusieurs des caractéristiques suivantes combinées entre elles ou non.

Selon une forme de réalisation avantageuse, la portion centrale s'étend sur la majorité de la longueur du conduit microfluidique.

Selon une forme de réalisation avantageuse, le volume de premier liquide dans le conduit microfluidique est supérieur au volume de la portion amont, en étant préférablement au moins deux fois supérieur au volume de la portion amont, très préférablement au moins cinq fois supérieur au volume de la portion amont.

Selon une forme de réalisation avantageuse, le volume de la portion aval est sensiblement identique au volume de la portion amont.

L'invention porte également sur un système de mélange microfluidique selon la revendication 5. Le système de mélange microfluidique comprend un conduit microfluidique destiné à contenir un premier liquide comprenant une première composition.

Selon l'invention, le système de mélange microfluidique comprend un système de commande et un injecteur qui est raccordé fluidiquement au conduit microfluidique.

L'injecteur est commandé électroniquement par le système de commande pour injecter en régime balistique un deuxième liquide dans le conduit microfluidique, de manière à ce que le deuxième liquide se disperse dans le premier liquide selon une dispersion de type Taylor-Aris dans le conduit microfluidique. Le deuxième liquide comprend une portion amont et une portion aval. La portion amont comprend une deuxième composition différente de la première composition. La portion aval comprend la première composition et elle est située en aval de la portion amont.

L'injecteur est commandé électroniquement par le système de commande pour injecter le deuxième liquide dans le conduit microfluidique, de manière à ce que la portion aval pousse la portion amont dans le conduit microfluidique, pour obtenir une concentration quasi homogène de la deuxième composition dans une portion centrale du conduit microfluidique.

Avantageusement, la vitesse d'écoulement du deuxième liquide dans le conduit microfluidique selon la direction longitudinale du conduit microfluidique en régime balistique est strictement supérieure à

$$v = \frac{L \times D_{th} \times A^2}{h^2}$$ où v est la vitesse d'écoulement du deuxième liquide, L est la longueur du conduit microfluidique, h est le rayon interne du conduit microfluidique, $D_{th}$ est le coefficient de diffusion d'origine thermique du deuxième liquide ou d'une portion du deuxième liquide,

et A une constante liée à la géométrie du canal qui est notamment comprise entre 1 et 10, la constante A étant égale à 3,8 lorsque le conduit est droit et de section transversale circulaire.

Avantageusement, le système de mélange microfluidique comprend une première source fluidique comprenant le premier liquide, une deuxième source fluidique comprenant la deuxième composition ou le deuxième liquide, la première source et la deuxième source étant raccordées fluidiquement à l'injecteur.

Selon une particularité de réalisation, l'injecteur est un injecteur pneumatique.

De préférence, l'injecteur pneumatique est configuré pour réguler la pression dans la première source et/ou dans la deuxième source.

Avantageusement, le système de mélange microfluidique comprend une vanne multivoies, la vanne multivoies comprenant des ports d'entrée qui sont raccordés fluidiquement chacun à une des sources fluidiques, et un port de sortie qui est raccordé fluidiquement au conduit microfluidique, la vanne multivoies étant configurée pour mettre en communication fluidique les ports d'entrée à tour de rôle avec le port de sortie.

De préférence, le système de commande est configuré pour donner ordre à la vanne multivoies de mettre en communication fluidique les ports d'entrée à tour de rôle avec le port de sortie.

Selon une particularité de réalisation, le système de mélange est apte à mettre en oeuvre le procédé de mélange tel que défini ci-dessus.

L'invention porte également sur un système d'analyse microfluidique comprenant un système de mélange tel que défini ci-dessus. Le système d'analyse comprend en outre un détecteur configuré pour émettre un signal représentatif de la concentration dans le conduit microfluidique d'un produit à analyser.

De préférence, le système de commande est configuré pour commander le détecteur.

Selon une particularité de réalisation, le détecteur est configuré pour détecter une luminosité du produit à analyser dans le conduit microfluidique.

De préférence, le détecteur est un détecteur linéaire configuré pour détecter la luminosité du produit à analyser de manière continue sur au moins portion du conduit.

De préférence, le détecteur comprend au moins une diode, un capteur optique tel qu'un capteur photographique, et/ou au moins une fibre optique.

De préférence, le détecteur comprend une source lumineuse configurée pour éclairer le conduit microfluidique.

Avantageusement, le détecteur est configuré pour mesurer la concentration du produit à analyser, dans le conduit microfluidique, avant l'écoulement d'une durée égale à un temps de Taylor $T_t = \dfrac{h^2}{A^2.D_{th}}$ après l'injection du deuxième liquide, où h est le rayon interne

du conduit microfluidique, $D_{th}$ est le coefficient de diffusion d'origine thermique du deuxième liquide ou d'une portion du deuxième liquide, et A une constante liée à la géométrie du canal qui est notamment comprise entre 1 et 10, la constante A étant égale à 3,8 lorsque le conduit est droit et de section transversale circulaire.

Selon une autre variante de réalisation, le deuxième liquide comprend une deuxième composition qui se disperse avec un gradient de concentration sensiblement linéaire de la deuxième composition relativement à la première composition dans le conduit microfluidique. Grâce à cette invention, il est notamment possible d'effectuer un titrage de la deuxième composition dans le liquide comprenant la première composition.

## BRÈVE DESCRIPTION DES DESSINS

La présente invention sera mieux comprise à la lecture de la description d'exemples de réalisation, en faisant référence aux dessins annexés sur lesquels :

- les figures 1a et 1b représentent schématiquement un système d'analyse microfluidique par analyse FIA;
- les figures 2a à 2c représentent schématiquement un système d'analyse microfluidique par analyse SIA ;
- la figure 3a représente schématiquement un système d'analyse microfluidique permettant un titrage par obtention, dans le temps, d'un gradient de concentration ;
- la figure 3b représentent schématiquement un système d'analyse microfluidique permettant un titrage continu ;
- la figure 4 représente schématiquement et partiellement un système d'analyse microfluidique d'un échantillon,
- la figure 5 illustre la réalisation d'un gradient de concentration linéaire d'un liquide dans le conduit du système d'analyse ;
- la figure 6 illustre la réalisation d'un mélange de concentration quasi-homogène dans le conduit du système d'analyse ;
- la figure 7 illustre la variation de la concentration d'un produit à analyser en fonction d'une distance par rapport à l'entrée du conduit microfluidique de sortie ;
- la figure 8 schématiquement et partiellement un système d'analyse microfluidique d'un échantillon.

## EXPOSÉ DÉTAILLÉ DE MODES DE RÉALISATION PARTICULIERS

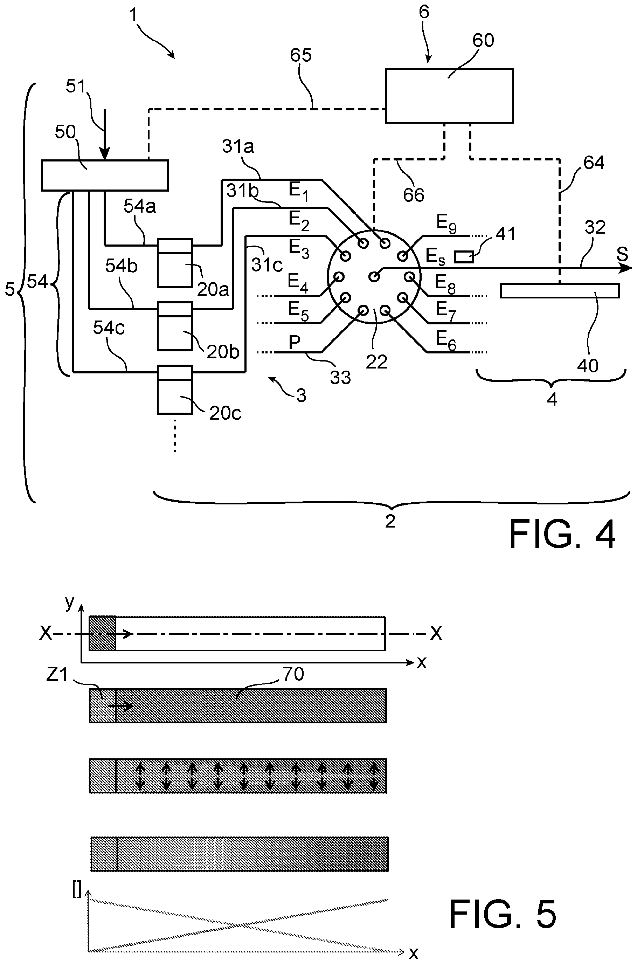

La figure 4 représente un système d'analyse microfluidique 1 d'un échantillon en milieu liquide. Le système d'analyse microfluidique 1 comprend une cellule d'analyse 2, un système de régulation de pression 5 et un système de commande et de contrôle 6.

La cellule d'analyse 2 comporte des réservoirs 20, une vanne multivoies 22, un détecteur de luminosité 4 et un ensemble 3 de conduits microfluidique qui relie fluidiquement les réservoirs 20 à la vanne 22 et qui achemine du liquide depuis la vanne 22 auprès du détecteur 4.

La cellule d'analyse 2 comprend autant de réservoirs 20a, 20b, 20c que de liquides à introduire à tour de rôle à travers la vanne 22 pour les acheminer auprès du détecteur 4.

Dans le mode de réalisation représenté à la figure 4, la cellule d'analyse 2 comprend trois réservoirs 20a, 20b, 20c.

Le premier réservoir 20a est destiné à contenir un premier liquide. Ce premier liquide comprend une première composition, par exemple un solvant et/ou un réactif. Le premier réservoir 20a est une source fluidique du premier liquide pour la cellule d'analyse 2.

Le deuxième réservoir 20b comprend une deuxième composition qui est différente de la première composition. La deuxième composition comprend par exemple l'échantillon à analyser ou un réactif. Le deuxième réservoir 20b est une source fluidique de la deuxième composition pour la cellule d'analyse 2.

Le troisième réservoir 20c comprend une troisième composition qui est différente de la première composition et de la deuxième composition. Elle est liquide ou présente dans un liquide. La troisième composition comprend par exemple un réactif éventuel qui est destiné à réagir avec l'échantillon pour former un produit à analyser dont la concentration est déterminée suite à sa détection par le détecteur 4. En variante, la troisième composition contient un liquide de purge de la cellule d'analyse 2. Le troisième réservoir 20c est une source fluidique du troisième liquide pour la cellule d'analyse 2.

Chacun des réservoirs 20 est situé fluidiquement entre un injecteur pneumatique 50 et la vanne multivoies 22. Les réservoirs 20 sont situés fluidiquement en parallèle les uns des autres.

La vanne multivoies 22 comprend une pluralité de ports d'entrée $E_1$, $E_2$, $E_3$, $E_4$, $E_5$, $E_6$, $E_7$, $E_8$, $E_9$, un port de sortie $E_s$ et un port de purge P. Les ports d'entrée $E_1$, $E_2$, $E_3$, $E_4$, $E_5$, $E_6$, $E_7$, $E_8$, $E_9$ sont raccordés fluidiquement chacun à au plus un des réservoirs 20. Au moins un des ports d'entrée peut notamment servir de port de purge P.

Dans le mode de réalisation représenté à la figure 4, le premier réservoir 20a est raccordé à un premier port d'entrée $E_1$ de la vanne 22 par un premier conduit microfluidique d'entrée 31a de la vanne. Le deuxième réservoir 20b est raccordé à un deuxième port d'entrée $E_2$ de la vanne 22 par un deuxième conduit microfluidique d'entrée 31b de la vanne. Le troisième réservoir 20c est raccordé à un troisième port d'entrée $E_3$ de la vanne 22 par un troisième conduit microfluidique d'entrée 31c de la vanne.

Le port de sortie $E_s$ est raccordé fluidiquement à un conduit microfluidique droit de sortie 32 qui longe le détecteur 4 pour que le détecteur 4 puisse détecter le liquide dans le conduit microfluidique de sortie 32. Le conduit microfluidique de sortie 32 débouche sur l'extérieur de la cellule d'analyse 2 au niveau d'une sortie S de la cellule d'analyse 2.

Le port de purge P est raccordé fluidiquement à l'extérieur de la vanne multivoie 22 par un conduit microfluidique de purge 33. Le port de purge P et le conduit de purge 33 servent à vider l'ensemble 3 des conduits de la cellule d'analyse 2 du liquide qu'ils contiennent avant l'arrêt de l'utilisation de la cellule d'analyse 2.

La vanne multivoies 22 comprend un obturateur configuré pour commuter entre dix positions par exemple dans chacune desquelles un des ports d'entrée $E_1$, $E_2$, $E_3$, $E_4$, $E_5$, $E_6$, $E_7$, $E_8$, $E_9$ et P est mis en communication fluidique avec le port de sortie $E_s$. En d'autres termes, la vanne multivoies 22 est configurée pour mettre en communication fluidique les ports d'entrée $E_1$, $E_2$, $E_3$, $E_4$, $E_5$, $E_6$, $E_7$, $E_8$, $E_9$ et P à tour de rôle avec le port de sortie $E_s$.

L'ensemble de conduits microfluidiques 3 de la cellule d'analyse 2 comprend les conduits d'entrée 31a, 31b, 31c, le conduit microfluidique de sortie 32 et le conduit microfluidique de purge 33.

Les conduits 31a, 31b, 31c, 32 et 33 de l'ensemble de conduits 3, en particulier le conduit microfluidique de sortie 32, sont des conduits microfluidiques.

Le conduit microfluidique de sortie 32 est formé par un capillaire droit. Ce capillaire est transparent, ce qui facilite la détection du liquide qu'il contient par le détecteur 4. Le conduit microfluidique de sortie 32 forme une puce microfluidique du système d'analyse 1. Il est destiné à être traversés par un écoulement laminaire de la première composition et/ou un écoulement de la deuxième composition avec un phénomène de dispersion de type de Taylor Aris.

Le détecteur 4 comprend au moins une diode, de préférence une barrette de diodes, ou bien un capteur optique linéaire, tel qu'un capteur photographique 40. Le détecteur 4 est linéaire en ce qu'il est configuré pour mesurer la concentration du produit à analyser de manière continue sur au moins une portion du conduit microfluidique 32.

Le capteur photographique 40 est par exemple un capteur à transfert de charge, également connu sous le nom de « capteur CCD », ou bien un capteur à semiconducteurs de type CMOS.

Le détecteur 4 comprend une source lumineuse 41. La source lumineuse 41 comprend une diode laser devant laquelle est montée une lentille de Powell pour éclairer de manière homogène le conduit microfluidique 32.

Le détecteur 4 est configuré pour détecter une luminosité du produit à analyser dans le conduit microfluidique 32, notamment par détection de la luminosité du produit sur la majorité de la longueur du conduit microfluidique 32.

Le détecteur 4 est conçu pour détecter la concentration du produit à analyser dans le conduit microfluidique 32. Ce produit à analyser est issu de l'échantillon, après qu'il ait réagi ou non avec au moins un réactif.

Le système de régulation de pression 5 comprend un injecteur pneumatique 50, une entrée de gaz 51 de l'injecteur, une sortie de gaz sous pression de l'injecteur qui forme un ensemble 54 de lignes d'alimentation en gaz sous pression des réservoirs 20.

L'ensemble de lignes d'alimentation 54 comprend autant de lignes d'alimentation 54a, 54b, 54c que de réservoirs 20. Les lignes d'alimentation 54a, 54b, 54c sont formées par des conduits, de préférences des capillaires microfluidiques, qui relient fluidiquement chacun la sortie de gaz de l'injecteur 50 à un des réservoirs 20a, 20b, 20c.

L'injecteur 50 est relié fluidiquement au premier réservoir 20a par une première ligne d'alimentation en gaz 54a de l'ensemble 54 de lignes d'alimentation. L'injecteur 50 est relié fluidiquement au deuxième réservoir 20b par une deuxième ligne d'alimentation 54b en gaz de l'ensemble 54 de lignes d'alimentation. L'injecteur 50 est relié fluidiquement au troisième réservoir 20c par une troisième ligne d'alimentation 54c en gaz de l'ensemble 54 de lignes d'alimentation.

L'injecteur pneumatique 50 est configuré pour injecter à tour de rôle le liquide de chaque réservoir 20 vers la vanne 22 jusqu'au conduit microfluidique de sortie 32. L'injecteur pneumatique 50 est commandé électroniquement par le système de commande 6.

Dans le mode de réalisation représenté à la figure 4, l'injecteur pneumatique 50 est configuré pour injecter la première composition hors du premier réservoir 20a à travers successivement le premier conduit d'entrée 31a, le premier port d'entrée $E_1$ et le port de sortie $E_s$ jusqu'au conduit microfluidique de sortie 32. L'injecteur pneumatique 50 est configuré pour injecter la deuxième composition hors du deuxième réservoir 20b à travers successivement le deuxième conduit d'entrée 31b, le deuxième port d'entrée $E_1$ et le port de sortie $E_s$ jusqu'au conduit microfluidique de sortie 32. L'injecteur pneumatique 50 est configuré pour injecter le troisième liquide hors du troisième réservoir 20c à travers successivement le troisième conduit d'entrée 31c, le troisième port d'entrée $E_3$ et le port de sortie $E_s$ jusqu'au conduit microfluidique de sortie 32.

Le système de contrôle et de commande 6 comprend une unité de commande 60 et un réseau 62 de lignes de contrôle et de commande qui sont reliées électriquement à l'unité de commande 60.

Le réseau 62 de lignes de contrôle et de commande comprend une ligne de contrôle et de commande 64 du détecteur qui relie l'unité de commande 60 au détecteur 4, une ligne de contrôle et de commande 65 de l'injecteur pneumatique qui relie l'unité de commande 6 à l'injecteur pneumatique 50, et une ligne 66 de contrôle et de commande de la vanne qui relie l'unité de commande 60 à la vanne 22.

L'unité de commande 60 est configurée pour commander le fonctionnement du détecteur 4. L'unité de commande 60 détermine une concentration de l'échantillon, à partir de la détection par le détecteur 4 du produit à analyser dérivé de l'échantillon ou présent initialement dans l'échantillon.

L'unité de commande 60 est configurée pour commander électroniquement à l'injecteur pneumatique 50 d'injecter la première composition hors de la source fluidique 20a, 20b, 20c en direction du conduit microfluidique 32.

L'unité de commande 60 est configurée pour donner ordre à la vanne multivoies 22 de mettre en communication fluidique les ports d'entrée $E_1$, $E_2$, $E_3$, $E_4$, $E_5$, $E_6$, $E_7$, $E_8$, $E_9$ à tour de rôle avec le port de sortie $E_s$, en commutant la position de l'obturateur de la vanne 22.

Un premier procédé d'analyse microfluidique par dosage d'un échantillon au moyen du système d'analyse 1 est décrit ci-dessous en référence à la figure 5.

Le procédé d'analyse comprend l'injection par l'injecteur pneumatique 50 de la première composition depuis le premier réservoir 20a dans le conduit microfluidique 32 selon un écoulement laminaire de type Poiseuille. La première composition remplit alors le conduit microfluidique 32, par exemple la majorité du volume du conduit microfluidique 32. La première composition est par exemple au repos dans le conduit microfluidique 32.

Il comprend l'injection par l'injecteur pneumatique 50 de la deuxième composition 71 depuis le deuxième réservoir 20b dans le conduit microfluidique 32 selon un écoulement de manière à ce que la deuxième composition 71 se disperse dans la première composition 70 selon une dispersion de type Taylor Aris en régime balistique. Le volume de deuxième composition injecté est notamment inférieur à celui de la première composition déjà présent dans le conduit microfluidique 32. Le volume de deuxième composition injecté est par exemple au moins deux fois inférieur à celui de la première composition.

L'écoulement de la deuxième composition fait en régime balistique, c'est-à-dire que la vitesse d'écoulement v de la deuxième composition dans le conduit microfluidique 32 est suffisamment importante pour négliger la dispersion de la deuxième composition par diffusion thermique, par rapport à la dispersion de la deuxième composition résultant de son profil de vitesse. En d'autres termes, le coefficient de diffusion thermique $D_{th}$ de la deuxième composition dans l'équation (1) ci-dessous est négligeable par rapport au terme de transport dispersif D de la deuxième composition.

$$D_{eff} = D_{th} + \frac{1}{A^2} \frac{v^2 h^2}{D_{th}} = D_{th} + D \ (1)$$

La vitesse d'écoulement v de la deuxième composition selon la direction de l'axe longitudinal X-X du conduit microfluidique en régime balistique est strictement supérieure à $\quad v = \frac{L \times D_{th} \times A^2}{h^2} \quad$ (2) où L est la longueur du conduit microfluidique 32, h est le rayon interne du conduit microfluidique 32, $D_{th}$ est le coefficient de diffusion d'origine thermique de la deuxième composition, et A une constante liée à la géométrie du canal qui est typiquement comprise entre 1 et 10. La constante A vaut par exemple 3,8 si le conduit 32 est droit à section transversale circulaire.

La deuxième composition tend alors à se disperser selon un cône d'axe de révolution selon la direction longitudinale X-X du conduit, avec un gradient de concentration linéaire relativement à la première composition dans le conduit microfluidique 32. La concentration de la deuxième composition 71 diminue linéairement dans le conduit microfluidique 32 vers l'aval.

La concentration de la première composition 70 augmente linéairement dans le conduit microfluidique 32 vers l'aval.

Le détecteur 4 détecte alors la concentration d'un produit à analyser présent dans la première composition, dans la deuxième composition ou issu d'une réaction chimique de la première composition avec la deuxième composition.

Le détecteur mesure la concentration du produit à analyser avant l'écoulement d'une durée égale à un temps de Taylor $T_t = \dfrac{h^2}{A^2 . D_{th}}$ (3) après l'injection de la deuxième composition. La diffusion thermique de la deuxième composition reste négligeable devant sa dispersion résultant de son profil de vitesse dans le conduit microfluidique 32, ce qui facilite la détection du produit à analyser.

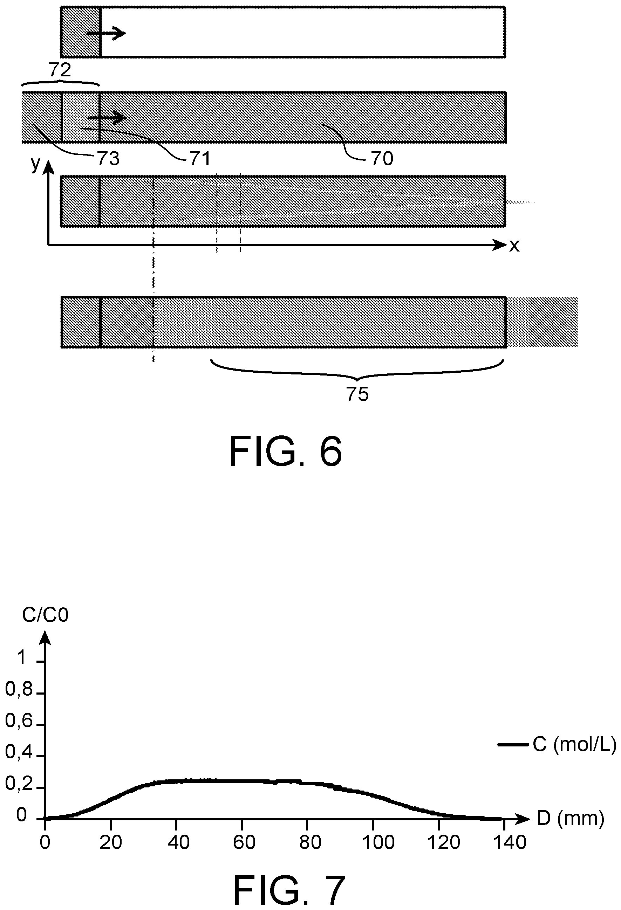

Un deuxième procédé d'analyse microfluidique d'un échantillon au moyen du système d'analyse 1 est décrit ci-dessous en référence aux figures 6 et 7.

Le procédé d'analyse commence par l'injection par l'injecteur pneumatique 50 de la première composition depuis le premier réservoir 20a dans le conduit microfluidique 32 selon un écoulement laminaire de type Poiseuille. La première composition remplit alors le conduit microfluidique 32, par exemple la majorité du volume du conduit microfluidique 32. La première composition reste ensuite par exemple au repos dans le conduit microfluidique 32.

Il comprend l'injection en régime balistique par l'injecteur pneumatique 50 d'un deuxième liquide 72 qui comprend une portion amont 71 et une portion aval 73 de compositions différentes. La portion amont 71 comprend la deuxième composition. La portion aval 73 comprend la première composition. Le volume de deuxième composition, c'est-à-dire le volume de portion amont 71, injecté est notamment inférieur à celui de la première composition qui est déjà présent dans le conduit microfluidique 32. Le volume de deuxième composition injecté est par exemple au moins deux fois inférieur à celui de la première composition qui est déjà présent dans le conduit microfluidique 32. Le volume de la portion aval 73 est notamment similaire à celui du volume de la portion amont 71.

La portion aval 73 est injectée dans le conduit microfluidique 32 en régime balistique de manière à pousser la portion amont 71 pour que le deuxième liquide 72 s'écoule selon un écoulement de type Taylor-Aris dans le conduit microfluidique 32.

La portion amont 71 tend à se disperser selon une dispersion de type Taylor Aris dans le conduit microfluidique 32 avec un gradient de concentration linéaire de la deuxième composition dans le conduit microfluidique 32.

La vitesse d'écoulement v de la portion amont 71 selon la direction de l'axe longitudinale X-X du conduit microfluidique en régime balistique est strictement supérieure à $V = \dfrac{L \times D_{th} \times A^2}{h^2}$ (2) où L est la longueur du conduit microfluidique 32, h est le rayon interne du conduit microfluidique 32, $D_{th}$ est le coefficient de diffusion d'origine thermique de la deuxième composition, et A une constante liée à la géométrie du canal qui est typiquement comprise entre 1 et 10. La constante A vaut par exemple 3,8 si le conduit 32 est droit à section transversale circulaire.

La portion aval 73 tend à se disperser selon une dispersion de type Taylor Aris derrière la portion amont 71, avec un gradient de concentration linéaire de la première composition dans le conduit microfluidique 32.

La vitesse d'écoulement v de la portion aval 73 selon la direction de l'axe longitudinal X-X du conduit microfluidique en régime balistique est strictement supérieure à $V_1 = \dfrac{L \times D_{th1} \times A^2}{h^2}$ (4). Dans l'équation (4) ci-dessus, L est la longueur du conduit microfluidique 32, h est le rayon interne du conduit microfluidique 32, $D_{th1}$ est le coefficient de diffusion d'origine thermique de la première composition, et A une constante liée à la géométrie du canal qui est typiquement comprise entre 1 et 10. La constante A vaut par exemple 3,8 si le conduit 32 est droit à section transversale circulaire.

Il en découle une concentration quasi homogène de la deuxième composition dans une portion centrale 75 du conduit microfluidique 32. Cette portion centrale 75 s'étend sur la majorité de la longueur du conduit microfluidique 32 selon sa direction longitudinale X-X.

Le détecteur 4 détecte alors la concentration d'un produit à analyser présent dans la première composition, dans la deuxième composition ou issu d'une réaction chimique de la première composition avec la deuxième composition.

Le détecteur mesure la concentration du produit à analyser avant l'écoulement d'une durée égale à un temps de Taylor $T_{tmin} = \dfrac{h^2}{A^2 . D_{th3}}$ (5) après l'injection de la deuxième composition. Dans l'équation (5) ci-dessus, h est le rayon interne du conduit microfluidique 32,

$D_{th3}$ est le maximum parmi le coefficient de diffusion d'origine thermique de la deuxième composition et le coefficient d'origine thermique de la première composition, et A une constante liée à la géométrie du canal qui est typiquement comprise entre 1 et 10. La constante A vaut par exemple 3,8 si le conduit 32 est droit à section transversale circulaire. La diffusion thermique du deuxième liquide reste négligeable devant sa dispersion résultant de son profil de vitesse dans le conduit microfluidique 32, ce qui facilite la détection du produit à analyser.

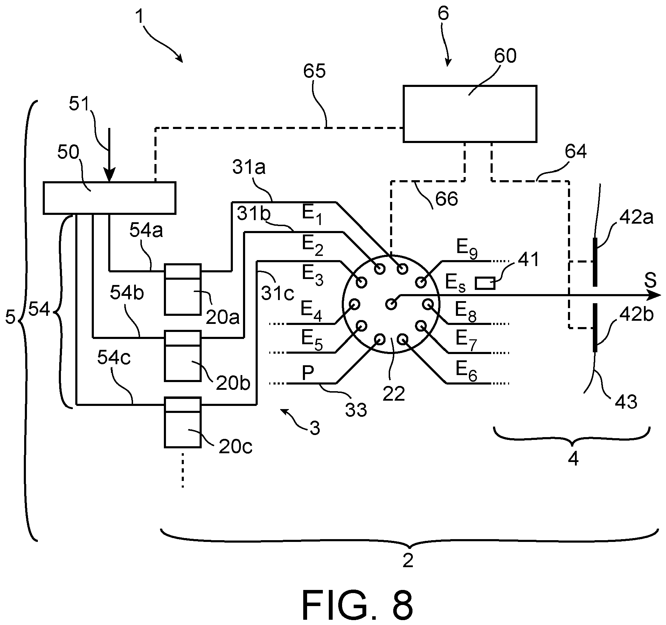

La figure 8 représente un deuxième mode de réalisation d'un système d'analyse microfluidique selon l'invention. Ce système d'analyse microfluidique 1 se distingue de celui du premier mode de réalisation par la nature du détecteur 4.

Le détecteur 4 comprend deux fibres optiques 42a et 42b qui sont en regard l'une de l'autre, en étant situées de part et d'autre du conduit microfluidique de sortie 32. Ces fibres optiques 42a et 42b sont chacune reliées d'une part à un spectrophotomètre qui est intégré à l'unité de commande 60 et d'autre part à la source lumineuse 41.

Deux exemples d'analyse microfluidique à partir d'un système d'analyse 1 selon le premier mode de réalisation ou selon le deuxième mode de réalisation sont décrits ci-dessous.

Dans ces exemples, l'injecteur pneumatique 50 est conçu pour délivrer une pression de gaz avec une précision de 1 mbar, ce qui permet d'injecter la première composition et/ou la deuxième composition hors de leur réservoirs 20a, 20b respectifs avec des débits de l'ordre de 0.5 à 3000 $\mu L.min^{-1}$. Le débit d'injection par l'injecteur 50 dépend notamment des dimensions du conduit microfluidique de sortie 32.

Le conduit microfluidique de sortie 32 possède un diamètre intérieur de 50 à 500 $\mu$m. Sa longueur est de 3 à 25 cm.

<u>Premier exemple : dilution de la fluorescéine dans de l'eau et détermination de la concentration de la fluorescéine.</u>

Le système d'analyse microfluidique 1 utilisé dans cet exemple a une configuration identique à celle du premier mode de réalisation qui est représenté à la figure 4.

Dans ce premier exemple, l'échantillon à diluer comprend de la fluorescéine de sodium à pH égal à 9. Cet échantillon forme la deuxième composition.

Le liquide vecteur utilisé est le solvant pour la dilution. Il s'agit d'eau à pH égal à 9 qui forme la première composition.

L'injecteur pneumatique 50 est commandé par l'unité de commande 60 pour injecter la première composition, c'est-à-dire de l'eau à pH égal à 9, dans le conduit de sortie 32.

L'injecteur pneumatique 50 est commandé par l'unité de commande 60 pour injecter le deuxième liquide, c'est-à-dire une portion amont 71 de la deuxième composition et une portion aval 73 de la première composition, dans le conduit de sortie 32 selon un écoulement de type Taylor-Aris. L'injection d'eau se fait simultanément à l'injection de fluorescéine, pour que l'eau pousse la fluorescéine dans le conduit microfluidique 32.

La quantité de deuxième liquide injectée est typiquement de l'ordre de 0,5 à 25 $\mu L$.

La fluorescéine de la portion amont 71 se disperse alors selon un phénomène de dispersion de type Taylor-Aris en régime balistique dans l'eau déjà présente dans le conduit 32. L'eau injectée ultérieurement avec la portion aval 73 se disperse dans le mélange d'eau et de fluorescéine selon un phénomène de dispersion de type Taylor-Aris en régime balistique.

Il s'établit ainsi un mélange de concentration homogène ou quasi-homogène de la solution de fluorescéine dans l'eau sur la majorité de la longueur du conduit de sortie 32. La fluorescence observée le long du conduit de sortie 32 est moins intense que celle de l'échantillon de départ.

Le liquide dans le conduit de sortie 32, c'est-à-dire le mélange du premier liquide et du deuxième liquide, est ensuite évacué hors de ce conduit 32.

Le détecteur 4 qui est équipé d'un filtre (non représenté), permet de distinguer clairement la fluorescéine de sodium en milieu plus basique, de la fluorescéine en milieu plus acide ou encore de l'eau qui forme un solvant non fluorescent.

Le volume total du premier liquide et du deuxième liquide utilisé dans le système d'analyse 1 est de l'ordre de 3 à 50 $\mu L$.

La figure 7 illustre l'évolution du rapport de la concentration de la fluorescéine C le long du conduit microfluidique de sortie 32 sur la concentration $C_0$ de la fluorescéine qui est présente initialement dans l'échantillon. La courbe représentée à la figure 7 montre la valeur de ce rapport en fonction de la distance de la détection par le détecteur 4 par rapport à l'entrée du conduit de sortie 32 du côté de la vanne 22. Il en découle que ce rapport est sensiblement constant sur la majorité de la longueur du conduit de sortie 32. Ce résultat s'explique notamment par la séquence d'injection décrite ci-dessus, c'est-à-dire l'injection de la deuxième composition entre deux injections de la première composition.

<u>Deuxième exemple : dosage de l'acidité libre d'une solution aqueuse contenant des ions hydrolysables en utilisant de la fluorescéine de sodium.</u>

Le système d'analyse microfluidique 1 utilisé dans cet exemple a une configuration identique à celle du premier mode de réalisation qui est représenté à la figure 4.

Dans ce deuxième exemple, le premier liquide est une solution aqueuse contenant des ions hydrolysables, par exemple du nitrite de fer de formule $Fe(NO3)_3$,

qui forme l'échantillon et dont on cherche à déterminer l'acidité libre. Cette solution aqueuse forme la première composition.

Une solution aqueuse contenant des éléments, tels que des ions oxalate de formule chimique $C2O4_2$, permettant de complexer les ions hydrolysables forme la deuxième composition. Ces éléments vont s'associer aux ions hydrolysables pour les empêcher d'effectuer une hydrolyse qui se répercuterait par le relargage d'ions $H^+$ qui fausseraient la mesure d'acidité libre.

Une solution de fluorescéine de sodium de concentration connue joue le rôle de réactif. Elle forme la troisième composition. L'intensité de la fluorescence de la fluorescéine dépend de l'acidité de la solution aqueuse dans laquelle elle est diluée. Plus la solution aqueuse est basique, plus la fluorescence détectée aura une intensité élevée. A partir de la fluorescence détectée par le détecteur 4, l'unité de commande 60 peut ainsi déduire le pH de la solution aqueuse de l'échantillon.

L'injecteur pneumatique 50 est commandé électroniquement pour injecter l'échantillon, c'est-à-dire la solution aqueuse, dans le conduit de sortie 32.

L'injecteur pneumatique 50 est commandé par l'unité de commande 60 pour injecter le deuxième liquide, c'est-à-dire une portion amont 71 de la deuxième composition et une portion aval 73 de la première composition, dans le conduit de sortie 32 selon un écoulement de type Taylor-Aris. L'injection d'échantillon se fait simultanément à l'injection de solution aqueuse contenant le complexant, pour que l'échantillon pousse la solution aqueuse contenant le complexant dans le conduit microfluidique 32.

La quantité de deuxième liquide injecté est typiquement de l'ordre de 0,5 à 25 $\mu$L.

La solution aqueuse contenant le complexant de la portion amont 71 se disperse alors selon un phénomène de dispersion de type Taylor-Aris en régime balistique dans l'échantillon déjà présent dans le conduit 32. L'échantillon injecté ultérieurement avec la portion aval 73 se disperse dans le mélange d'échantillon et de solution aqueuse contenant le complexant selon un phénomène de dispersion de type Taylor-Aris en régime balistique.

Il s'établit ainsi un mélange de concentration homogène ou quasi-homogène de la solution aqueuse contenant le complexant dans l'échantillon sur la majorité de la longueur du conduit de sortie 32. Le complexant va donc pouvoir s'associer aux ions hydrolysables dans tout le conduit.

L'injecteur pneumatique 50 est commandé électroniquement pour injecter la troisième composition, c'est-à-dire de l'échantillon de fluorescéine, selon un écoulement de type Taylor-Aris dans le conduit de sortie 32. La quantité du troisième produit injecté est typiquement de l'ordre de 0,5 à 25 $\mu$L.

La troisième composition se disperse dans le mélange quasi homogène de la première composition avec la deuxième composition selon une dispersion de type Taylor-Aris en régime balistique dans le conduit microfluidique 32, avec un gradient de concentration linéaire du deuxième produit.

La luminosité du mélange de la solution de fluorescéine et du mélange des deux autres solutions dans le conduit de sortie 32 est détectée par le détecteur 4, ce qui permet à l'unité de commande 60 de déterminer le pH de la solution aqueuse.

Le liquide dans le conduit de sortie 32, c'est-à-dire le mélange des trois compositions, est ensuite évacué hors de ce conduit 32.

## REFERENCES

[1] US 4 315 754
[2] US 5 849 592
[3] US 2003/032195
[4] WO 2014/135512

## Revendications

1. Procédé de mélange microfluidique, comprenant l'injection en régime balistique d'au moins un deuxième liquide dans un conduit microfluidique (32) comprenant un premier liquide comprenant une première composition (70), de manière à ce que le deuxième liquide se disperse dans le premier liquide selon une dispersion de type Taylor-Aris du deuxième liquide relativement au premier liquide dans le conduit microfluidique (32),

   le deuxième liquide comprenant une portion amont (71) et
   une portion aval (73), la portion amont (71) comprenant une deuxième composition différente de la première composition, la portion aval (73) comprenant la première composition et étant située en aval de la portion amont (71), le deuxième liquide étant injecté dans le conduit microfluidique (32), de manière à ce que la portion aval (73) pousse la portion amont (71) dans le conduit microfluidique (32), pour obtenir une concentration quasi homogène de la deuxième composition dans une portion centrale (75) du conduit microfluidique (32).

2. Procédé de mélange selon la revendication 1, dans lequel la portion centrale (75) s'étend sur la majorité de la longueur du conduit microfluidique (32).

3. Procédé de mélange selon l'une quelconque des revendications précédentes, dans lequel le volume de premier liquide dans le conduit microfluidique (32) est supérieur au volume de la portion amont (71), en étant préférablement au moins deux fois supérieur au volume de la portion amont (71), très préférablement au moins cinq fois supérieur au volume de la portion amont (71).

**4.** Procédé de mélange selon l'une quelconque des revendications précédentes, dans lequel le volume de la portion aval (73) est sensiblement identique au volume de la portion amont (71).

**5.** Système de mélange microfluidique (1) comprenant un conduit microfluidique (32), un premier liquide et un deuxième liquide,

le conduit microfluidique (1) contenant le premier liquide comprenant une première composition,

le système de mélange microfluidique (1) comprenant un système de commande (6) et un injecteur (50) qui est raccordé fluidiquement au conduit microfluidique (32),

l'injecteur (50) étant configuré pour être commandé électroniquement par le système de commande (6) pour injecter en régime balistique le deuxième liquide dans le conduit microfluidique (32), de manière à ce que le deuxième liquide se disperse dans le premier liquide selon une dispersion de type Taylor-Aris dans le conduit microfluidique (32),

le deuxième liquide comprenant une portion amont (71) et une portion aval (73), la portion amont (71) comprenant une deuxième composition différente de la première composition, la portion aval (73) comprenant la première composition et étant située en aval de la portion amont (71),

l'injecteur (50) étant configuré pour être commandé électroniquement par le système de commande (6) pour injecter le deuxième liquide dans le conduit microfluidique (32), de manière à ce que la portion aval (73) pousse la portion amont (71) dans le conduit microfluidique (32), pour obtenir une concentration quasi homogène de la deuxième composition dans une portion centrale du conduit microfluidique (32).

**6.** Système de mélange microfluidique (1) selon la revendication précédente, dans lequel la vitesse d'écoulement (v) du deuxième liquide dans le conduit microfluidique (32) selon la direction longitudinale du conduit microfluidique (32) en régime balistique est strictement supérieure à

$$v = \frac{L \times D_{th} \times A^2}{h^2}$$

où L est la longueur du conduit microfluidique (32), h est le rayon interne du conduit microfluidique (32), $D_{th}$ est le coefficient de diffusion d'origine thermique d'au moins une portion du deuxième liquide et A une constante liée à la géométrie du canal qui est notamment comprise entre 1 et 10, la constante A étant égale à 3,8 lorsque le conduit (32) est droit et de section transversale circulaire.

**7.** Système de mélange microfluidique (1) selon l'une quelconque des revendications 5 et 6, comprenant une première source fluidique (20a, 20b, 20c) comprenant le premier liquide, une deuxième source fluidique (20a, 20b, 20c) comprenant la deuxième composition ou le deuxième liquide, la première source (20a, 20b, 20c) et la deuxième source (20a, 20b, 20c) étant raccordées fluidiquement à l'injecteur (50).

**8.** Système de mélange microfluidique (1) selon l'une quelconque des revendications 5 à 7, dans lequel l'injecteur (50) est un injecteur pneumatique, l'injecteur pneumatique (50) étant de préférence configuré pour réguler la pression dans la première source (20a, 20b, 20c) et/ou dans la deuxième source (20a, 20b, 20c).

**9.** Système de mélange microfluidique (1) selon l'une quelconque des revendications 5 à 8, comprenant une vanne multivoies (22), la vanne multivoies (22) comprenant des ports d'entrée ($E_1$, $E_2$, $E_3$, $E_4$, $E_5$, $E_6$, $E_7$, $E_8$, $E_9$) qui sont raccordés fluidiquement chacun à une des sources fluidiques (20a, 20b, 20c), et un port de sortie ($E_s$) qui est raccordé fluidiquement au conduit microfluidique (32), la vanne multivoies (22) étant configurée pour mettre en communication fluidique les ports d'entrée ($E_1$, $E_2$, $E_3$, $E_4$, $E_5$, $E_6$, $E_7$, $E_8$, $E_9$) à tour de rôle avec le port de sortie ($E_s$),

dans lequel le système de commande (6) est de préférence configuré pour donner ordre à la vanne multivoies (22) de mettre en communication fluidique les ports d'entrée (E1, E2, E3, E4, E5, E6, E7, E8, E9) à tour de rôle avec le port de sortie (Es).

**10.** Système d'analyse microfluidique (1) comprenant un système de mélange selon l'une quelconque des revendications 5 à 9, le système d'analyse comprenant en outre un détecteur (4) configuré pour émettre un signal représentatif de la concentration dans le conduit microfluidique (32) d'un produit à analyser, le système de commande (6) étant de préférence configuré pour commander le détecteur (4).

**11.** Système d'analyse (1) selon la revendication précédente, dans lequel le détecteur (4) est configuré pour détecter une luminosité du produit à analyser dans le conduit microfluidique (32),

le détecteur (4) comprenant de préférence au moins une diode, un capteur optique tel qu'un capteur photographique (40), et/ou au moins une fibre optique (42).

**12.** Système d'analyse (1) selon l'une quelconque des revendications 10 et 11, dans lequel le détecteur (4) est configuré pour mesurer la concentration du produit à analyser, dans le conduit microfluidique (32), avant l'écoulement d'une durée égale à un temps de Taylor $T_t = \frac{h^2}{A^2.D_{th}}$ après l'injection du deuxième liquide, où h est le rayon interne du conduit microfluidique (32), $D_{th}$ est le coefficient de diffusion d'origine thermique d'au moins une portion du deuxième liquide, et A une constante liée à la géométrie du canal qui est notamment comprise entre 1 et 10, la constante A étant égale à 3,8 lorsque le conduit (32) est droit et de section transversale circulaire.

**Patentansprüche**

**1.** Mikrofluidisches Mischverfahren, umfassend die Injektion in ballistischer Form mindestens einer zweiten Flüssigkeit in eine mikrofluidische Leitung (32), umfassend eine erste Flüssigkeit, die die eine erste Zusammensetzung (70) umfasst, sodass sich die zweite Flüssigkeit in der ersten Flüssigkeit gemäß einer Taylor-Aris-Dispersion der zweiten Flüssigkeit in Bezug auf die erste Flüssigkeit in der mikrofluidischen Leitung (32) verteilt,

wobei die zweite Flüssigkeit einen stromaufwärts gelegenen Abschnitt (71) und einen stromabwärts gelegenen Abschnitt (73) umfasst, wobei der stromaufwärts gelegene Abschnitt (71) eine zweite Zusammensetzung umfasst, die sich von der ersten Zusammensetzung unterscheidet, wobei der stromabwärts gelegene Abschnitt (73) die erste Zusammensetzung umfasst, und sich stromabwärts des stromaufwärts gelegenen Abschnitts (71) befindet,
wobei die zweite Flüssigkeit in die mikrofluidische Leitung (32) injiziert wird, sodass der stromabwärts gelegene Abschnitt (73) den stromaufwärts gelegenen Abschnitt (71) in die mikrofluidische Leitung (32) schiebt, um eine quasi homogene Konzentration der zweiten Zusammensetzung in einem zentralen Abschnitt (75) der mikrofluidischen Leitung (32) zu erhalten.

**2.** Mischverfahren nach Anspruch 1, wobei sich der zentrale Abschnitt (75) über den Großteil der Länge der mikrofluidischen Leitung (32) erstreckt.

**3.** Mischverfahren nach einem der vorstehenden Ansprüche, wobei das Volumen der ersten Flüssigkeit in der mikrofluidischen Leitung (32) größer als das Volumen des stromaufwärts gelegenen Abschnitts (71) ist, und dabei vorzugsweise mindestens doppelt so groß wie das Volumen des stromaufwärts gelegenen Abschnitts (71), besonders bevorzugt mindestens fünfmal so groß wie das Volumen des stromaufwärts gelegenen Abschnitts (71) ist.

**4.** Mischverfahren nach einem der vorstehenden Ansprüche, wobei das Volumen des stromabwärts gelegenen Abschnitts (73) im Wesentlichen gleich dem Volumen des stromaufwärts gelegenen Abschnitts (71) ist.

**5.** Mikrofluidisches Mischsystem (1), umfassend eine mikrofluidische Leitung (32), eine erste Flüssigkeit und eine zweite Flüssigkeit,

wobei die mikrofluidische Leitung (1) die erste Flüssigkeit enthält, eine erste Zusammensetzung umfasst,
wobei das mikrofluidische Mischsystem (1) ein Steuersystem (6) und einen Injektor (50) umfasst, der fluidtechnisch an die mikrofluidische Leitung (32) angeschlossen ist,
wobei der Injektor (50) konfiguriert ist, um von dem Steuersystem (6) elektronisch gesteuert zu werden, um die zweite Flüssigkeit in ballistischer Form in die mikrofluidische Leitung (32) zu injizieren, sodass sich die zweite Flüssigkeit in der ersten Flüssigkeit gemäß einer Taylor-Aris-Dispersion in der mikrofluidischen Leitung (32) verteilt,
wobei die zweite Flüssigkeit einen stromaufwärts gelegenen Abschnitt (71) und einen stromabwärts gelegenen Abschnitt (73) umfasst, wobei der stromaufwärts gelegene Abschnitt (71) eine zweite Zusammensetzung umfasst, die sich von der ersten Zusammensetzung unterscheidet, wobei der stromabwärts gelegene Abschnitt (73) die erste Zusammensetzung umfasst, und sich stromabwärts des stromaufwärts gelegenen Abschnitts (71) befindet,
wobei der Injektor (50) konfiguriert ist, um von dem Steuersystem (6) elektronisch gesteuert zu werden, um die zweite Flüssigkeit in die mikrofluidische Leitung (32) zu injizieren, sodass der stromabwärts gelegene Abschnitt (73) den stromaufwärts gelegenen Abschnitt (71) in die mikrofluidische Leitung (32) schiebt, um eine quasi homogene Konzentration der zweiten Zusammensetzung in einem zentralen Abschnitt der mikrofluidischen Leitung (32) zu erhalten.

**6.** Mikrofluidisches Mischsystem (1) nach dem vorstehenden Anspruch, wobei die Strömungsgeschwindigkeit (v) der zweiten Flüssigkeit in der mikrofluidischen Leitung (32) entlang der Längsrichtung der mikrofluidischen Leitung (32) in ballistischer Form

$$v = \frac{L x D_{th} x A^2}{h^2}$$

streng größer als ist, wobei L die Länge der mikrofluidischen Leitung (32) ist, h der Innenradius der mikrofluidischen Leitung (32) ist, $D_{th}$ der ursprüngliche thermische Diffusionskoeffizient mindestens eines Abschnitts der zweiten Flüssigkeit ist, und A eine Konstante in Verbindung mit der Geometrie des Kanals ist, die insbesondere zwischen 1 und 10 liegt, wobei die Konstante A gleich 3,8 ist, wenn die Leitung (32) gerade ist, und einen kreisförmigen Querschnitt aufweist.

7.  Mikrofluidisches Mischsystem (1) nach einem der Ansprüche 5 und 6, umfassend eine erste fluidische Quelle (20a, 20b, 20c), die die erste Flüssigkeit umfasst, eine zweite fluidische Quelle (20a, 20b, 20c), die die zweite Zusammensetzung oder die zweite Flüssigkeit umfasst, wobei die erste Quelle (20a, 20b, 20c) und die zweite Quelle (20a, 20b, 20c) fluidtechnisch an den Injektor (50) angeschlossen sind.

8.  Mikrofluidisches Mischsystem (1) nach einem der Ansprüche 5 bis 7, wobei der Injektor (50) ein pneumatischer Injektor ist,
    wobei der pneumatische Injektor (50) vorzugsweise konfiguriert ist, um den Druck in der ersten Quelle (20a, 20b, 20c) und/oder in der zweiten Quelle (20a, 20b, 20c) zu regeln.

9.  Mikrofluidisches Mischsystem (1) nach einem der Ansprüche 5 bis 8, umfassend ein Mehrwegeventil (22), wobei das Mehrwegeventil (22) Eingangsanschlüsse ($E_1$, $E_2$, $E_3$, $E_4$, $E_5$, $E_6$, $E_7$, $E_8$, $E_9$) umfasst, die jeweils fluidtechnisch an eine der fluidischen Quellen (20a, 20b, 20c) angeschlossen sind, und einen Ausgangsanschluss (Es), der fluidtechnisch an die mikrofluidische Leitung (32) angeschlossen ist, wobei das Mehrwegeventil (22) konfiguriert ist, um die Eingangsanschlüsse ($E_1$, $E_2$, $E_3$, $E_4$, $E_5$, $E_6$, $E_7$, $E_8$, $E_9$) nacheinander mit dem Ausgangsanschluss ($E_S$) in fluidische Kommunikation zu versetzen,
    wobei das Steuersystem (6) vorzugsweise konfiguriert ist, um dem Mehrwegeventil (22) den Befehl zu erteilen, die Eingangsanschlüsse ($E_1$, $E_2$, $E_3$, $E_4$, $E_5$, $E_6$, $E_7$, $E_8$, $E_9$) nacheinander mit dem Ausgangsanschluss ($E_S$) in fluidische Kommunikation zu versetzen.

10. Mikrofluidisches Analysesystem (1), umfassend ein Mischsystem nach einem der Ansprüche 5 bis 9, wobei das Analysesystem weiter einen Detektor (4) umfasst, der konfiguriert ist, um ein Signal auszugeben, das repräsentativ für die Konzentration eines zu analysierenden Produkts in der mikrofluidischen Leitung (32) ist,
    wobei das Steuersystem (6) vorzugsweise konfiguriert ist, um den Detektor (4) zu steuern.

11. Analysesystem (1) nach dem vorstehenden Anspruch, wobei der Detektor (4) konfiguriert ist, um eine Helligkeit des zu analysierenden Produkts in der mikrofluidischen Leitung (32) zu detektieren,
    wobei der Detektor (4) vorzugsweise mindestens eine Diode, einen optischen Sensor, wie einen Bildsensor (40) und/oder mindestens eine Glasfaser (42) umfasst.

12. Analysesystem (1) nach einem der Ansprüche 10 und 11, wobei der Detektor (4) konfiguriert ist, um die Konzentration des zu analysierenden Produkts in der mikrofluidischen Leitung (32) vor Ablauf einer

$$T_t = \frac{h^2}{A^2 . D_{th}}$$

Dauer gleich einer Taylor-Zeit nach der Injektion der zweiten Flüssigkeit zu messen, wobei h der Innenradius der mikrofluidischen Leitung (32) ist, $D_{th}$ der ursprüngliche thermische Diffusionskoeffizient mindestens eines Abschnitts der zweiten Flüssigkeit ist, und A eine Konstante in Verbindung mit der Geometrie des Kanals ist, die insbesondere zwischen 1 und 10 liegt, wobei die Konstante A gleich 3,8 ist, wenn die Leitung (32) gerade ist, und einen kreisförmigen Querschnitt aufweist.

**Claims**

1.  A microfluidic mixing method, comprising the ballistic injection of at least one second liquid in a microfluidic conduit (32) comprising a first liquid comprising a first composition (70), so that the second liquid is dispersed in the first liquid according to a Taylor-Aris type dispersion of the second liquid relative to the first liquid in the microfluidic conduit (32),

    the second liquid comprising an upstream portion (71) and a downstream portion (73), the upstream portion (71) comprising a second composition different from the first composition, the downstream portion (73) comprising the first composition and being located downstream of the upstream portion (71),
    the second liquid being injected into the microfluidic conduit (32), so that the downstream portion (73) pushes the upstream portion (71) into the microfluidic conduit (32), to obtain an almost homogeneous concentration of the second composition in a central portion (75) of the microfluidic conduit (32).

2.  The mixing method according to claim 1, wherein the central portion (75) extends over the majority of the length of the microfluidic conduit (32).

**3.** The mixing method according to any one of the preceding claims, wherein the volume of first liquid in the microfluidic conduit (32) is greater than the volume of the upstream portion (71), by being preferably at least twice greater than the volume of the upstream portion (71), very preferably at least five times greater than the volume of the upstream portion (71).

**4.** The mixing method according to any one of the preceding claims, wherein the volume of the downstream portion (73) is substantially identical to the volume of the upstream portion (71).

**5.** A microfluidic mixing system (1) comprising a microfluidic conduit (32), a first liquid and a second liquid, the microfluidic conduit (1) containing the first liquid comprising a first composition, the microfluidic mixing system (1) comprising a control system (6) and an injector (50) which is fluidly connected to the microfluidic conduit (32),

the injector (50) being configured to be electronically controlled by the control system (6) to ballistically inject a second liquid into the microfluidic conduit (32), so that the second liquid is dispersed in the first liquid according to a Taylor-Aris type dispersion in the microfluidic conduit (32),

the second liquid comprising an upstream portion (71) and a downstream portion (73), the upstream portion (71) comprising a second composition different from the first composition, the downstream portion (73) comprising the first composition and being located downstream of the upstream portion (71),

the injector (50) being configured to be electronically controlled by the control system (6) to inject the second liquid into the microfluidic conduit (32), so that the downstream portion (73) pushes the upstream portion (71) in the microfluidic conduit (32), to obtain an almost homogeneous concentration of the second composition in a central portion of the microfluidic conduit (32).

**6.** The microfluidic mixing system (1) according to the preceding claim, wherein the flow speed (v) of the second liquid in the microfluidic conduit (32) in the longitudinal direction of the microfluidic conduit (32) in the ballistic regime is strictly greater than

$$v = \frac{L \times D_{th} \times A^2}{h^2}$$

where L is the length of the microfluidic conduit (32), h is the inner radius of the microfluidic conduit (32), $D_{th}$ is the diffusion coefficient of thermal origin of at least one portion of the second liquid and A a constant related to the geometry of the channel which is in particular of between 1 and 10, the constant A being equal to 3.8 when the conduit (32) is straight and of circular cross-section.

**7.** The microfluidic mixing system (1) according to any one of claims 5 and 6, comprising a first fluid source (20a, 20b, 20c) comprising the first liquid, a second fluid source (20a, 20b, 20c) comprising the second composition or the second liquid, the first source (20a, 20b, 20c) and the second source (20a, 20b, 20c) being fluidly connected to the injector (50).

**8.** The microfluidic mixing system (1) according to any one of claims 5 to 7, wherein the injector (50) is a pneumatic injector,

the pneumatic injector (50) preferably being configured to regulate the pressure in the first source (20a, 20b, 20c) and/or in the second source (20a, 20b, 20c).

**9.** The microfluidic mixing system (1) according to any one of claims 5 to 8, comprising a multi-way valve (22), the multi-way valve (22) comprising inlet ports ($E_1$, $E_2$, $E_3$, $E_4$, $E_5$, $E_6$, $E_7$, $E_8$, $E_9$) which are each fluidly connected to one of the fluid sources (20a, 20b, 20c), and an outlet port ($E_s$) which is fluidly connected to the microfluidic conduit (32), the multi-way valve (22) being configured to fluidly connect the inlet ports ($E_1$, $E_2$, $E_3$, $E_4$, $E_5$, $E_6$, $E_7$, $E_8$, $E_9$) in turn with the outlet port ($E_s$),

wherein the control system (6) is preferably configured to instruct the multi-way valve (22) to fluidly connect the inlet ports ($E_1$, $E_2$, $E_3$, $E_4$, $E_5$, $E_6$, $E_7$, $E_8$, $E_9$) in turn with the outlet port ($E_s$).

**10.** The microfluidic mixing system (1) comprising a mixing system according to any one of claims 5 to 9, the analysis system further comprising a detector (4) configured to emit a signal representative of the concentration in the microfluidic conduit (32) of a product to be analysed,

the control system (6) preferably being configured to control the detector (4).

**11.** An analysis system (1) according to the preceding claim, wherein the detector (4) is configured to detect a brightness of the product to be analysed in the microfluidic conduit (32),

the detector (4) preferably comprising at least one diode, an optical sensor such as a photographic sensor (40), and/or at least one optical fibre (42).

**12.** The analysis system (1) according to any one of claims 10 and 11, wherein the detector (4) is configured to measure the concentration of the product to be analysed, in the microfluidic conduit (32), before the flow of a duration equal to a Taylor time

$$T_t = \frac{h^2}{A^2.D_{th}}$$ after the injection of the second liquid, where h is the inner radius of the microfluidic conduit (32), $D_{th}$ is the diffusion coefficient of thermal origin of at least one portion of the second liquid and A a constant related to the geometry of the channel which is in particular of between 1 and 10, the constant A being equal to 3.8 when the conduit (32) is straight and of circular cross-section.

$$T_t = \frac{h^2}{A^2.D_{th}}$$

FIG. 1a

FIG. 1b

FIG. 2a

FIG. 2b

FIG. 2c

FIG. 3a

FIG. 3b

FIG. 4

FIG. 5

FIG. 6

FIG. 7

FIG. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003032195 A
- WO 2014135512 A